# FASCICULE DE BREVET EUROPEEN

(11) **EP 2 733 795 B1**
(45) Date de publication et mention de la délivrance du brevet: **14.10.2020**
(21) Numéro de dépôt: 13193114.9
(22) Date de dépôt: 15.11.2013
(51) Int. Cl.: H01R 39/26, H01R 39/20, H02K 13/10

(54) **Balai pour machine électrique tournante**
Bürste für elektrisch umlaufende Maschine
Brush for rotating electric machine

(30) Priorité: 15.11.2012 FR 1260860
(43) Date de publication de la demande: 21.05.2014
(73) Titulaire: VALEO EQUIPEMENTS ELECTRIQUES MOTEUR, 94046 Créteil (FR)
(72) Inventeur: Gentil, Maximilien, 69960 Corbas (FR); Saltel, Alexandre, 69007 Lyon (FR); Labbe, Nicolas, 69003 Lyon (FR); Metral, Jean Sébastien, 38290 La Verpillière (FR); Andreux, Raphaël, 69003 Lyon (FR)
(74) Mandataire: Duprez, Richard

(56) Documents cités:
- EP-A2- 0 966 072
- DE-A1-102007 055 658
- FR-A1- 2 911 728
- JP-A- S6 173 550

## Description

### 1. Domaine de l'invention

La présente invention se rapporte au domaine des machines électriques tournantes à collecteur, notamment des démarreurs, des alternateurs, ou des alterno-démarreurs.

Plus particulièrement, l'invention concerne la conception et la réalisation des balais pour de telles machines.

### 2. Solutions de l'art antérieur

De manière classique, les machines électriques tournantes, équipant notamment des moteurs thermiques pour véhicules automobiles, ont besoin d'une variation de flux magnétique pour créer une force électromotrice et ainsi fonctionner correctement. Cette variation de flux est assurée d'une part par la mise en rotation d'un rotor, comprenant un collecteur cylindrique monté mobile en rotation autour d'un axe fixe, de manière à obtenir une alternance des pôles magnétiques nord et sud et, d'autre part, par le champ magnétique créé par l'alimentation en courant continu de lames placées sur le rotor. Le courant continu est amené par un ou plusieurs balais montés sur un stator de la machine tournante.

Un balai comprend, de manière connue, une face de contact qui vient tour à tour en contact frottant avec chacune des lames du collecteur cylindrique. Cette face présente un contour fermé rectangulaire comprenant une portion frontale amorçant le contact entre la lame et le balai, et une portion dorsale terminant le contact entre la lame et la balai.

Le document DE 102007055658 décrit un balai présentant une surface de roulement apte à venir en contact avec un commutateur et permettant d'optimiser la connection entre le balai et le commutateur en augmentant la résistance d'une section transversale du balai.

Le document EP 0966072 décrit un dispositif de commutation de courant pour des machines électriques comprennant un commutateur formé de lamelles et un balai qui repose avec une pression d'application contre une enveloppe extérieure de forme concave du commutateur.

Le document JP 61073550 décrit un balai ayant un élément de faible résistance positionné du côté du début de la commutation et ayant un élément de forte résistance positionné du côté de la fin de la commutation par rapport au sens de rotation du commutateur.

Le document FR 2911728 décrit un balai pour une machine électrique tournante présentant une face terminale revêtue d'une couche tampon réalisée dans un matériau apte à réduire la résistance éléctrique de contact avec le matériau du collecteur.

Pour optimiser les performances électriques du contact entre les balais et les lames de collecteur, il est recherché une résistance de contact aussi faible que possible entre ces deux ensembles. Cependant le contact entre les balais et les lames collectrices tournantes étant un contact par frottement, les balais doivent présenter une résistance mécanique suffisante pour assurer une durée de vie convenable au regard de l'utilisation, ce qui nécessite un compromis entre les deux exigences.

Une source d'usure prématurée des balais de stator provient du fait que, en fin de commutation entre un balai et une lame donnée, c'est-à-dire lorsque la portion dorsale passe d'une configuration dans laquelle elle est en contact avec la lame à une configuration dans laquelle elle n'est pas en contact avec la lame, un arc électrique peut apparaître ce qui use prématurément le balai et provoque un encrassement des lames. Ces arcs électriques proviennent de courants de Foucault créés par la variation du flux magnétique. Lors de la fin de commutation, des pertes sont alors générées par la formation d'arcs électriques.De ce fait, les performances électriques du contact ainsi que la durée de vie des balais ne sont pas optimales ce qui n'est pas satisfaisant.

Un autre inconvénient découlant de cette usure prématurée est que les coûts de maintenance ainsi que les coûts de mise en œuvre s'avèrent relativement élevés du fait de la faible durée de vie des balais et de la maintenance nécessaire au niveau du rotor.

### 3. Objectifs de l'invention

L'invention a notamment pour objectif de pallier au moins certains des inconvénients de l'art antérieur.

Plus précisément, un objectif de l'invention est de fournir un balai pour machine électrique tournante permettant de réduire fortement voire supprimer le risque de formation d'arcs électriques au niveau de la portion dorsale de la face de contact, de manière à limiter l'usure prématurée des balais ainsi que l'encrassement des lames du collecteur.

Un autre objectif de l'invention est de fournir un tel balai qui permette d'optimiser la résistance de contact et ainsi la durée de vie, tout en optimisant les performances électriques du contact avec les lames de collecteur.

Encore un objectif de l'invention est de fournir une solution qui soit simple à mettre en œuvre et peu coûteuse.

### 4. Résumé de l'invention

Ces objectifs, ainsi que d'autres qui apparaîtront plus clairement par la suite, sont atteints à l'aide d'un balai pour machine électrique tournante, comprenant une face de contact apte à venir en contact frottant avec une lame de collecteur cylindrique monté mobile en rotation autour d'un axe fixe, ladite face de contact présentant un contour fermé comprenant :
- une première portion frontale amorçant le contact entre ladite lame et ledit balai ;
- une deuxième portion dorsale terminant le contact entre ladite lame et ledit balai ;
ledit balai présentant une largeur maximale sur ladite face de contact, mesurée parallèlement audit axe de rotation dudit collecteur.

Selon l'invention, ladite portion dorsale présente une dimension supérieure à ladite largeur maximale du balai.

En outre selon l'invention, le balai comprend :
- une première zone portant la portion frontale; et
- une deuxième zone portant la portion dorsale,
la deuxième zone étant fabriquée en un matériau de résistivité plus grande que le matériau de la première zone.

Ainsi, l'invention propose une approche nouvelle et inventive permettant de réduire le risque de formation d'arcs électriques au niveau de la portion dorsale de la face de contact et ainsi de limiter l'usure prématurée des balais ainsi que l'encrassement des lames du collecteur dus à l'apparition de ces arcs.

En effet, le fait de mettre en œuvre une face dont la portion dorsale présente une dimension supérieure à ladite largeur maximale, ce qui implique de mettre en œuvre une portion dorsale présentant un profil qui n'est pas rectiligne, réduit de fait le bord de contact (autrement appelé limite dorsale) entre le balai et la lame en fin de commutation ce qui engendre une augmentation de la chute de tension et donc une diminution de la production d'arcs électriques.

Le fait de mettre en œuvre une couche plus résistive au niveau de la deuxième zone permet de limiter la production d'arcs électriques en fin de commutation, et donc les pertes par courants de Foucault, en augmentant la chute de tension à la fin du contact entre le balai et la lame. Par ailleurs, cela permet de limiter l'usure au niveau de cette deuxième zone qui est plus exposée aux risques d'usure prématurée de par les arcs électriques. Ce mode de réalisation peut particulièrement être utilisé pour des applications « stop-start » car il fournit une endurance de balai adaptée au fonctionnement « Re-Start » des démarreurs de cette application, qui sollicite fortement le démarreur et donc les balais du fait du nombre de démarrages relativement élevé par rapport à une utilisation « classique » dans les véhicules.

Dans un mode de réalisation, le balai pour machine électrique tournante, comprend une face de contact apte à venir en contact frottant avec une lame de collecteur cylindrique monté mobile en rotation autour d'un axe fixe, ladite face de contact présentant un contour fermé comprenant :
- une première portion frontale amorçant le contact entre ladite lame et ledit balai ;
- une deuxième portion dorsale terminant le contact entre ladite lame et ledit balai, ladite deuxième portion dorsale comprenant un bord de fin de contact ;
ledit balai présentant une largeur maximale sur ladite face de contact, mesurée parallèlement audit axe de rotation dudit collecteur. Dans ce mode de réalisation, ledit bord de fin de contact présente une dimension inférieure à ladite largeur maximale du balai. Egalement dans ce même mode de réalisation, le balai comprend :
- une première zone portant ladite portion frontale ; et
- une deuxième zone portant ladite portion dorsale,
ladite deuxième zone étant fabriquée en un matériau de résistivité plus grande que le matériau de ladite première zone.

Selon un mode de réalisation particulier de l'invention ladite portion dorsale présente au moins une rainure.

Ainsi, la rainure permet de diminuer le bord de contact entre le balai et la lame en fin de commutation, appelée également limite dorsale par la suite, et réduit ainsi le risque de formation d'arcs électriques ainsi que l'intensité des arcs formés. En effet, le fait de diminuer le bord de contact permet d'augmenter la résistance et ainsi de diminuer l'intensité.

Dans ce cas, ladite rainure peut-être ménagée au milieu de ladite portion dorsale.

Ainsi, cela permet d'avoir un balai dont la portion dorsale est symétrique ce qui peut simplifier la fabrication.

Dans d'autres modes de réalisation, ladite face de contact présente au moins un chanfrein ménagé au voisinage d'au moins une des extrémités de ladite portion dorsale.

Ainsi, cela permet de diminuer la largeur du balai en contact avec la lame de façon progressive, et ainsi d'éviter des chutes de tension brutales. En d'autres termes, le chanfrein permet de réduire de façon constante la surface de contact entre le balai et la lame ce qui est moins brutale qu'une coupe nette du contact entre le balai et la lame.

Dans un mode de réalisation particulier, ladite portion dorsale présente au moins un arc de cercle.

Dans ce cas, l'arc de cercle peut être concave ou convexe.

Ainsi, cela permet d'adapter la forme des balais suivant les différentes mises en œuvre.

L'invention concerne également une machine électrique tournante comprenant un collecteur cylindrique tournant portant une pluralité de lames comprenant au moins un balai selon au moins un des modes de réalisation de l'invention.

Selon les modes de réalisation, la machine électrique tournante comprend au moins deux balais dont les portions dorsales présentent un profil de fin de contact complémentaire.

Ainsi, le fait de mettre en œuvre des balais dont les portions dorsales présentent un profil de fin de contact complémentaire permet de répartir de façon homogène l'usure due à l'apparition d'arcs électriques au niveau des lames de collecteur. Les balais dont les portions dorsales présentent un profil de fin de contact complémentaire circulent sur une même piste « principale » du collecteur, c'est-à-dire sont en contact avec la même partie d'une lame au cours du temps, mais comprennent des portions dorsales dont les limites dorsales respectives circulent sur une ou des pistes secondaires complémentaires distinctes comprises dans la piste principale. En d'autres termes, les balais circulent sur une même piste principale, cette piste principale comprenant un ensemble de pistes secondaires sur lesquelles circulent les limites dorsales respectives, ces pistes secondaires étant distinctes. De ce fait, les profils de fin de contact de ces balais sont complémentaires.

La machine électrique tournante constitue, selon les modes de réalisation, un démarreur, un alternateur ou un alterno-démarreur pour véhicule automobile.

### 5. Liste des figures

D'autres caractéristiques et avantages de l'invention apparaitront plus clairement à la lecture de la description suivante d'un mode de réalisation, donné à titre de simple exemple illustratif et non limitatif, et des dessins annexés, parmi lesquels :
- la figure 1 est un schéma de principe d'une machine électrique tournante selon un premier mode de réalisation ;
- la figure 2 est une vue en coupe selon un plan II-II orthogonal à l'axe de rotation d'un schéma de principe d'un ensemble « balai-collecteur » selon un premier mode de réalisation de l'invention ;
- les figures 3A à 3E sont des vues de face de la face de contact du balai selon différents modes de réalisation ; et
- la figure 4 est une vue en coupe selon un plan II-II orthogonal à l'axe de rotation d'un ensemble « balai-collecteur » selon un autre mode de réalisation de l'invention.

### 6. Description détaillée

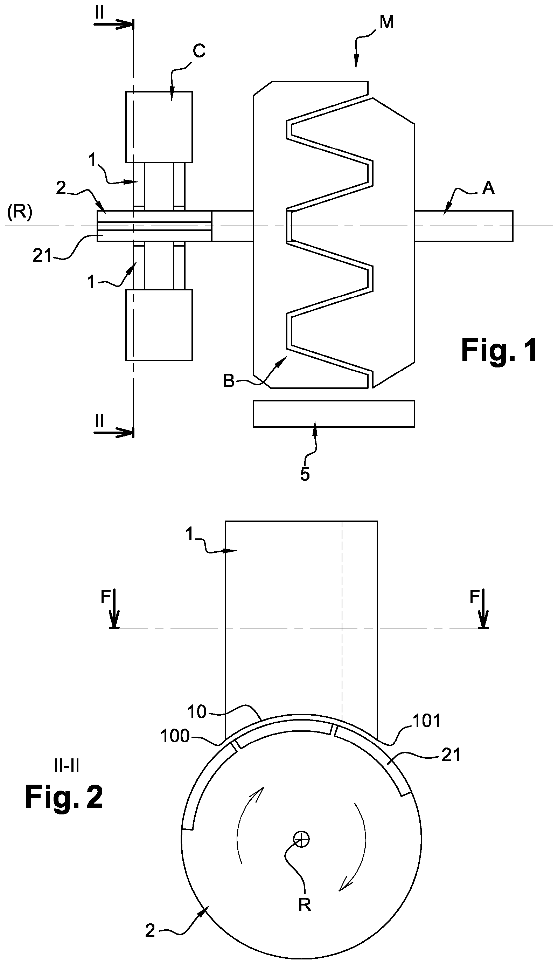

On présente par la suite, en relation avec la **figure 1**, une vue d'ensemble d'une machine électrique tournante M selon un premier mode de réalisation de l'invention.

Comme illustré sur cette figure 1, la machine électrique tournante M comprend un stator S et un rotor B. Le rotor est fixé à un arbre A sur lequel est monté un collecteur 2 ; l'ensemble est mobile en rotation autour d'un axe R fixe et est ainsi en rotation par rapport au stator S de manière à faire varier le flux magnétique et ainsi créer une force électromotrice. Afin de créer un contact électrique entre le bobinage du rotor B et le circuit du véhicule, des balais 1 sont montés dans des porte-balais C, et sont placés au contact de lames 21 disposées de manière régulière sur la face externe du collecteur. Le collecteur comporte un nombre de lames compris entre 25 et 29 lames même si l'on peut mettre en œuvre un collecteur comprenant un nombre différent de lames sans toutefois sortir du cadre de l'invention. Dans ce mode de réalisation, deux porte-balais C sont ménagés de part et d'autre du collecteur et portent chacun deux balais 1 au contact de plusieurs lames 21, qui sont dans ce cas de figure en cuivre.

La machine électrique tournante M illustrée en figure 1 correspond à un alternateur. Cependant, une machine électrique tournante selon l'invention peut également être, suivant les modes de réalisation, un démarreur ou un alterno-démarreur.

Lorsque le collecteur 2 est en rotation, les balais 1 vont venir en contact tour à tour avec les différentes lames 21 du collecteur 2.

**La** **figure 2** illustre de manière plus précise le fonctionnement de l'ensemble « balai-collecteur » au travers d'une vue en coupe de cet ensemble selon un plan II-II orthogonal à l'axe de rotation du collecteur 2, dans un premier mode de réalisation de l'invention.

Comme illustré sur cette figure 2, les lames 21 sont disposées de manière régulière sur le contour de la surface externe du collecteur 2 (les lames n'étant pas toutes représentées sur cette figure) et sont en contact avec un balai 1 au niveau d'une face de contact 10. En moyenne, chaque balai 1 est en contact avec un nombre de lames 21 compris entre 1,2 et 1,4.

Dans ce mode de réalisation, le collecteur tourne autour de son axe de rotation R dans le sens horaire. Dans ce sens, une lame du collecteur amorcera le contact avec le balai 1 au niveau d'une limite frontale 100 et terminera le contact avec le balai au niveau d'une limite dorsale 101. La limite frontale 100 correspond au premier point ou à l'ensemble des premiers points du balai 1 étant en contact avec la lame 21 du collecteur, lors d'un contact entre le balai 1 et une lame 21 donnée, tandis que la limite dorsale 101 correspond au dernier point ou à l'ensemble des derniers points du balai 1 étant en contact avec la lame 21 du collecteur 2, lors d'un contact entre le balai 1 et la lame donnée 21. En d'autres termes, en référence à la figure 2, le contact entre le balai 1 et une lame 21 donnée est amorcé à la limite gauche 100 (ou limite frontale) de la face de contact 10 du balai 1 et se termine à la limite droite 101 (ou limite dorsale) de la face de contact 10 du balai 1.

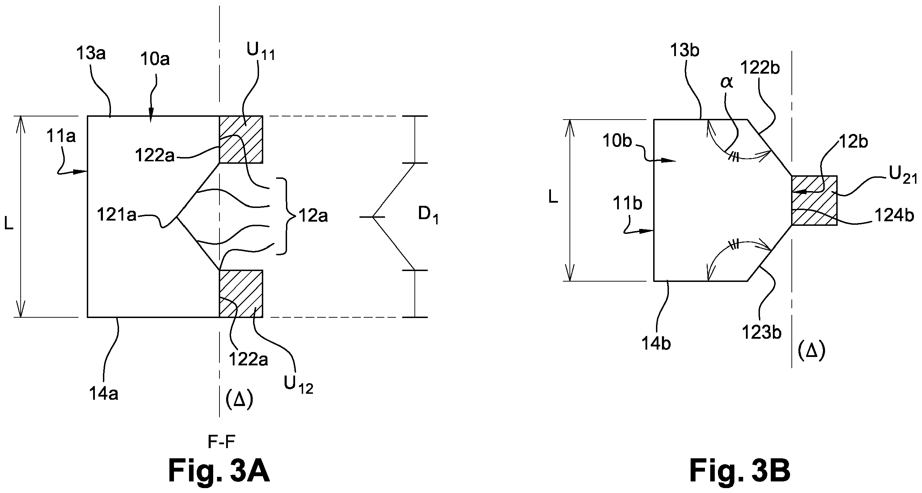

On présente maintenant, en relation avec **les** **figures 3A à 3E****,** plusieurs profils de faces de contact 10 d'un balai 1 selon différents modes de réalisation.

**La** **figure 3A** est une coupe selon l'axe F-F du balai de la figure 2, permettant d'illustrer le profil de la face de contact 10 selon un premier mode de réalisation. La face de contact 10a présente un contour fermé comprenant :
- une première portion frontale 11a amorçant le contact entre la lame 21 et le balai 1 ;
- une deuxième portion dorsale 12a terminant le contact entre la lame 21 et le balai 1 ;
- une troisième 13a et une quatrième 14a portions, autrement appelées portions latérales, reliant les première 11a et deuxième 12a portions au niveau des extrémités respectives et fermant ainsi le contour de la face de contact 10a.

La première portion frontale 11a présente un profil rectiligne et est sensiblement parallèle à l'axe de rotation R du collecteur 2 (non représenté sur cette figure). Du fait de son profil rectiligne et parallèle à l'axe de rotation R du collecteur 2, elle correspond dans son intégralité à la limite frontale 100 du balai 1.

Les troisième 13a et quatrième 14a portions du contour, de même longueur dans ce mode de réalisation, sont ménagées à chacune des extrémités de la portion frontale 11a et forment respectivement un angle sensiblement droit avec cette portion frontale 11a. De ce fait, la distance L séparant les deux portions latérales 13a, 14a, mesurée parallèlement à l'axe de rotation R du collecteur 2, est sensiblement constante et correspond à une largeur maximale L du balai 1 sur la face de contact 10. La portion dorsale 12a, correspondant à la portion du balai 1 qui termine le contact entre la lame 21 et le balai 1, relie les extrémités libres respectives des portions latérales 13a, 14a de manière à fermer le contour de la face de contact. Cette portion dorsale 12a est composée, dans ce mode de réalisation, de deux segments 122a de même longueur formant respectivement un angle droit avec les troisième 13a et quatrième 14a portions et d'une rainure 121a de forme triangulaire séparant ces deux segments 122a, la rainure 121a étant de ce fait ménagée au milieu de la portion dorsale 12a. Les deux segments 122a correspondent, dans ce mode de réalisation, à la limite dorsale 101 illustrée en figure 2.

Ainsi, la portion dorsale 12a présente une dimension D1, totalisant la dimension de chacun des deux segments 122a et de chacun des deux côtés de la rainure 121a, qui est supérieure à la largeur maximale L du balai 1.

Par dimension de la portion dorsale, on entend donc la longueur du contour mesuré entre les deux points à partir desquels la largeur du balai décroît.

De par la mise en œuvre de la rainure 121a, la face de contact 10a présente un profil de fin de contact, correspondant au profil de la limite dorsale 101 (ou bord de fin de contact) du balai 1, dont la dimension est réduite par rapport à la dimension de la première portion frontale 11a. Le profil de fin de contact correspond au profil formé par le point ou l'ensemble des points ménagés à la limite dorsale de la face de contact du balai 1 et étant alors le ou les derniers points du balai 1 en contact avec une lame 21 donnée lors d'un contact entre cette lame 21 et le balai 1. Sur la figure 3A, le profil de fin de contact correspond à l'ensemble des points situés sur la droite référencée Δ, c'est-à-dire les deux segments 122a de la portion dorsale 12a.

En d'autres termes, la portion dorsale comprend, de par la rainure 121a, un bord de fin de contact dont la dimension est inférieure à la longueur maximale L du balai.

Le fait d'avoir un profil de fin de contact réduit permet ainsi d'augmenter la résistance de contact en fin de commutation, c'est-à-dire lorsque le balai 1 et la lame 21 vont passer d'une configuration dans laquelle ils sont en contact à une configuration dans laquelle ils ne sont plus en contact, et ainsi de diminuer le risque de création de courants d'arc électriques. Par ailleurs, une telle solution ne modifie en rien le taux de recouvrement des balais, c'est-à-dire ne modifie pas la durée du contact entre le balai 1 et la lame 21, seule la géométrie de la face de contact du balai 1 est modifiée de manière à réduire les effets néfastes des arcs électriques pour le balai 1 ainsi que pour la lame 21 en contact avec le balai 1.

Bien évidemment, on pourrait prévoir d'autres modes de réalisation de l'invention dans lesquels la rainure 121a ne serait pas disposée au milieu de la portion dorsale 12a. On peut également prévoir des modes de réalisation dans lesquels la rainure n'est pas de forme triangulaire mais par exemple de forme arrondie ou rectangulaire. On peut en outre prévoir des modes de réalisation dans lesquels la portion dorsale comprend plusieurs rainures.

**La** **figure 3B** illustre un balai pour machine électrique tournante présentant une face de contact 10b selon un deuxième mode de réalisation.

De même que pour le premier mode de réalisation, le contour fermé de la face de contact 10b du deuxième mode de réalisation comprend une première portion frontale 11b présentant un profil rectiligne et sensiblement parallèle à l'axe de rotation R du collecteur (non représenté sur cette figure).

Par ailleurs, ici aussi des troisième 13b et quatrième 14b portions du contour, de même longueur, sont ménagées à chacune des extrémités de la portion frontale 11b et forment chacune un angle sensiblement droit avec cette portion frontale 11b. De ce fait, la distance L séparant les deux portions latérales 13b, 14b, mesurée parallèlement à l'axe de rotation R du collecteur 2, est sensiblement constante et correspond à une largeur maximale L du balai 1 sur la face de contact 10b.

Le contour de la face de contact 10b du balai de ce mode de réalisation diffère du contour de la face de contact 10a du balai du premier mode de réalisation par le fait que la portion dorsale 12b présente deux chanfreins 122b, 123b ménagés au voisinage de ses extrémités et au contact des portions latérales respectives 13b, 14b. Chacun de ces chanfreins 122b, 123b forme ainsi un angle α compris entre 25° et 65° avec les portions latérales 13b, 14b respectives. Un segment 124b relie les extrémités libres des deux chanfreins 122b, 123b de manière à fermer le contour de la face de contact 10b. Sur cette figure 3B, les deux chanfreins 122b, 123b ont une dimension égale et forment avec leur portion latérale respective un angle α identique, plaçant ainsi le segment 124b au milieu de la portion dorsale 12b de façon parallèle à l'axe de rotation du collecteur. Ainsi, la portion dorsale 12b présente une dimension, totalisant la dimension des deux chanfreins 122b, 123b et la dimension du segment 124b entre les deux chanfreins, qui est supérieure à la largeur maximale L du balai 1.

Dans ce mode de réalisation, la limite dorsale correspond au segment 124b, le profil de fin de contact étant donc un segment dont la dimension correspond à l'intégralité de ce segment 124b.

On pourrait également prévoir d'autres modes de réalisation de l'invention dans lesquels l'angle α des deux chanfreins serait différent. On peut également prévoir des modes de réalisation dans lesquels le segment 124b n'est pas placé au centre de la portion dorsale 12b ou n'est pas parallèle à l'axe de rotation R du collecteur 2.

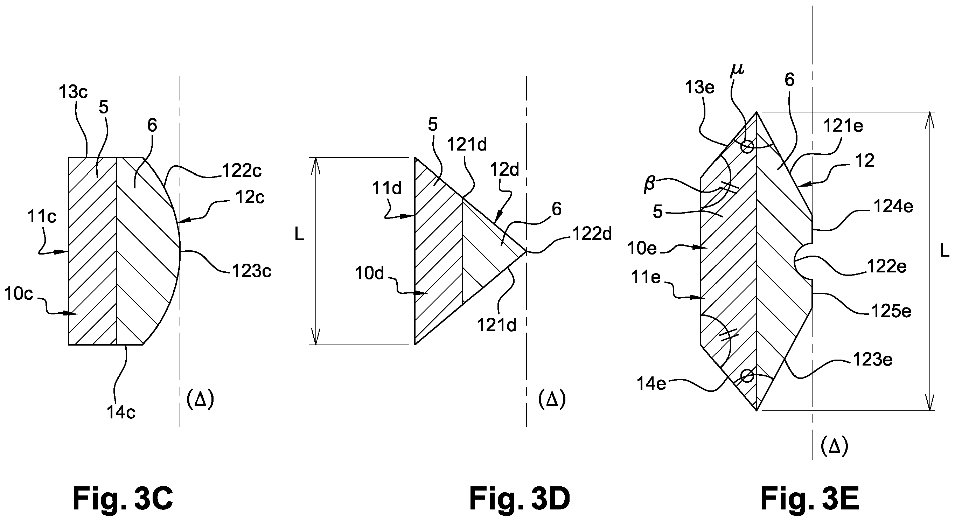

**La** **figure 3C** présente un troisième mode de réalisation de l'invention, dans lequel la portion dorsale 12c de la face de contact 10c présente une courbe (en l'occurrence un arc de cercle) concave 122c reliant des portions latérales 13c, 14c ménagées à chacune des extrémités d'une portion frontale 11c et formant chacune un angle sensiblement droit avec cette portion frontale 11c.

Dans ce mode de réalisation, la limite dorsale est constitué de l'unique point 123c de la courbe situé sur la droite référencée Δ qui correspond à la seule droite tangente à l'arc de cercle et parallèle à l'axe de rotation R du collecteur 2. Le profil de fin de contact est donc un point.

**La** **figure 3D** présente un quatrième mode de réalisation de l'invention. Dans ce mode de réalisation, la face de contact 10d présente un contour fermé, en forme de triangle isocèle, comprenant uniquement une portion frontale 11d parallèle à l'axe de rotation R du collecteur 2, et une portion dorsale 12d composée des deux autres côtés 121d du triangle.

Dans ce mode de réalisation, la dimension totale de la portion dorsale 12d est égale à la somme de la dimension des deux côtés 121d, et est supérieure à la dimension de la portion frontale 12d correspondant directement, dans ce cas de figure, à la largeur maximale L du balai 1.

Sur cette figure 3D, le profil de fin de contact correspond à un point, la limite dorsale étant le point situé du triangle situé sur la droite référencée Δ, à savoir le sommet 122d formé par l'intersection des deux côtés 121d du triangle isocèle.

On peut également prévoir des modes de réalisation dans lesquels le contour fermé n'est pas en forme de triangle isocèle mais en forme de triangle quelconque.

Quant à la **figure 3E****,** elle illustre un cinquième mode de réalisation de l'invention, dans lequel la face de contact 10e présente un contour fermé comprenant une première portion frontale 11e qui présente un profil rectiligne et sensiblement parallèle à l'axe de rotation R du collecteur 2 (non représenté sur cette figure). Aux extrémités de cette portion frontale 11e sont ménagées des portions latérales 13e, 14e formant respectivement un angle β compris entre 90° et 165° avec la portion frontale 11e, les portions latérales 13e, 14e étant de même longueur dans cet exemple.

Une portion dorsale 12e relie les portions latérales 13e, 14e de manière à fermer le contour et comprend deux chanfreins 121e, 123e placés au contact des portions latérales respectives 13e, 14e et formant respectivement un angle µ compris entre 100° et 180° avec ces portions latérales 13e, 14e. Aux extémités libres de ces chanfreins 121e, 123e sont ménagés deux segments 124e, 125e sensiblements parallèles à l'axe de rotation R du collecteur 2. Enfin, la portion dorsale 12e comprend, aux extrémités libres de ces segments 124e, 125e un arc de cercle 122e convexe.

Comme illustré sur cette figure, la largeur maximale L du balai 1 est atteinte au niveau des extrémités des portions latérales 13e, 14e en contact avec la portion dorsale 12e. La dimension totale de la portion dorsale 12e est égale à la somme de la dimension des deux chanfreins 121e, 123e, des deux segments 124e, 125e et de l'arc de cercle 122e. Ainsi, la dimension totale de la portion dorsale 12e est supérieure à la largeur maximale L du balai 1.

Dans ce mode de réalisation, le profil de fin de contact de la face de contact 10e correspond aux deux segments 124e, 125e.

Les figures 3C à 3E illustrent des modes de réalisation dans lesquels le balai 1 comprend deux zones, à savoir :
- une première zone 5 portant la portion frontale ; et
- une deuxième zone 6 portant la portion dorsale.
La deuxième zone 6 est fabriquée en un matériau de résistivité plus grande que la résistivité du matériau de la première zone 5. De ce fait, la production d'arcs électriques en fin de commutation se trouve limitée par la plus grande résistivité de la deuxième zone 6, et l'usure prématurée due à ces arcs électriques se trouve réduite fortement.

Dans cet exemple, la première zone 5 est fabriquée dans un matériau à fort taux de cuivre de manière à limiter la chute de tension et donc la perte de puissance, tandis que la deuxième zone 6 est fabriquée dans un matériau avec un taux de graffite relativement élevé.

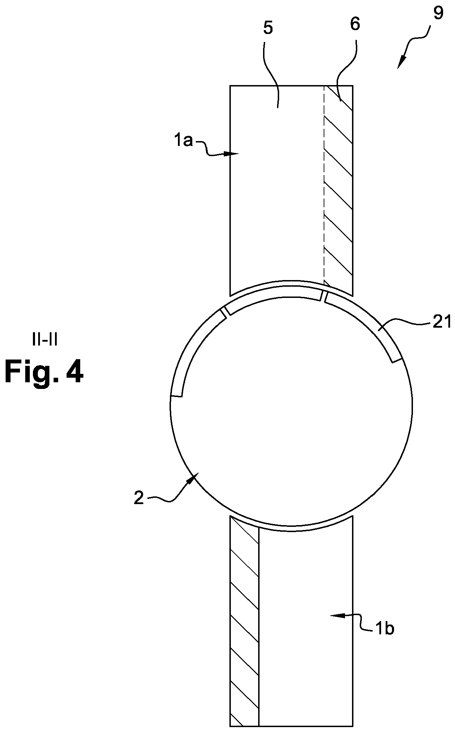

On présente par la suite, en relation avec la **figure 4****,** une vue en coupe selon un plan orthogonal à l'axe de rotation d'un ensemble « balai-collecteur » d'un autre mode de réalisation de l'invention.

Dans ce mode de réalisation, la machine électrique tournante 9 inclut le même collecteur 2 que dans les autres modes de réalisation présentés ci-dessus, comprenant des lames de cuivre 21. Dans cet exemple, la machine comprend en outre deux balais, à savoir un balai la dont la face de contact 10a est similaire à la face de contact représentée en figure 3A, et un balai 1b dont la face de contact 10b est similaire à la face de contact représentée en figure 3B. La face de contact 10a comprend donc une rainure 121a ménagée au milieu de sa portion dorsale, qui est constituée en outre de deux segments 122a. De son côté, la face de contact 10b comprend une portion dorsale 12b présentant deux chanfreins 122b, 123b séparés par un segment 124b.

Les balais 1a, 1b sont positionnés de telle sorte qu'ils circulent sur une même piste du collecteur 2 de largeur L(appelée par la suite piste principale), c'est-à-dire qu'ils sont en contact avec la même partie d'une lame 21 donnée au cours du temps. La limite dorsale du balai 1a, composée des deux segments 122a, va circuler sur cette piste principale au niveau de deux pistes secondaires distinctes U11, U12 (représentées en figure 3A) et va donc provoquer une usure au niveau de ces deux pistes U11, U12 en raison des arcs électriques formés en fin de commutation. De son côté, la limite dorsale du balai 1b, composée du segment 124b, va circuler sur cette piste principale au niveau d'une piste secondaire U21 (représentée en figure 3B) et va donc provoquer une usure au niveau de cette piste U21.

Dans ce mode de réalisation, les balais 1a, 1b sont dimensionnés de sorte que leurs profils de fin de contact soient complémentaires, c'est-à-dire que leurs limites dorsales respectives sont dimensionnées de manière à ce que les pistes secondaires U11, U12 soient distinctes de la piste secondaire U21, ces trois pistes secondaires étant des parties complémentaires de la piste principale. Ainsi, les usures dues à la formation d'arcs électriques sont réparties sur la longueur L de la piste principale, de manière plus homogène.

En d'autres termes, pour que des balais présentent des profils de fin de contact complémentaires, il faut que les pistes secondaires sur lesquelles circulent les limites dorsales respectives soient distinctes et soient comprises dans la piste principale commune dans laquelle circulent les balais.

Bien évidemment, on peut imaginer d'autres modes de réalisation qui diffèrent des modes de réalisation présentés, sans que toutefois ils ne sortent du cadre de l'invention.

On peut par exemple prévoir des contours de faces de contact différents, pour lesquels la dimension totale de la portion finale serait supérieure à la largeur maximale du balai, telle qu'une face de contact présentant un biseau au niveau de la portion dorsale, ou une face de contact présentant une portion dorsale de forme quelconque. On peut aussi mettre en œuvre une face de contact dont la portion dorsale comprend une rainure de taille, de forme différentes, et non centrée sur la portion dorsale. On peut envisager aussi une face de contact dont la portion dorsale comprend un unique chanfrein.

Par ailleurs, on peut prévoir des machines électriques tournantes possédant un nombre supérieur à 2 balais. On peut en outre prévoir une machine tournante pour laquelle le profil de fin de contact d'au moins une partie des balais est complémentaire, par exemple une machine tournante comprenant 3 balais dont le profil de fin de contact est complémentaire.

On peut également mettre en œuvre des balais dont les première et deuxième zones sont conçues en des matériaux différents des matériaux présentés dans les modes de réalisation ci-dessus, le matériau de la deuxième zone possédant une résistivité plus grande que la résistivité du matériau de la première zone. On peut aussi prévoir des modes de réalisation dans lesquels les lames du collecteur ne seraient pas en cuivre mais en un autre matériau conducteur.

## Revendications

1. Balai (1) pour machine électrique tournante, comprenant une face de contact (10, 10a, 10b, 10c, 10e) apte à venir en contact frottant avec une lame (21) de collecteur cylindrique (2) monté mobile en rotation autour d'un axe (R) fixe,
ladite face de contact (10, 10a, 10b, 10c, 10e) présentant un contour fermé comprenant :
- une première portion frontale (11a, 11b, 11c, 11e) apte à amorcer le contact entre ladite lame (21) et ledit balai (1) ;
- une deuxième portion dorsale (12a, 12b, 12c, 12e) apte à terminer le contact entre ladite lame (21) et ledit balai (1) ;
ledit balai (1) présentant une largeur maximale (L) sur ladite face de contact (10), mesurée parallèlement audit axe de rotation (R) dudit collecteur,
ladite portion dorsale (12) présente des dimensions, totalisant (D1) supérieure à ladite largeur maximale (L) du balai ; et en ce qu'il comprend
- une première zone (5) portant ladite portion frontale (11a, 11b, 11c, 11e); et
- une deuxième zone (6) portant ladite portion dorsale (12a, 12b, 12c, 12e),
**caractérisé en ce que** ladite deuxième zone (6) est fabriquée en un matériau de résistivité plus grande que le matériau de ladite première zone (5).

2. Balai (1) pour machine électrique tournante, comprenant une face de contact (10, 10d) apte à venir en contact frottant avec une lame (21) de collecteur cylindrique (2) monté mobile en rotation autour d'un axe (R) fixe,
ladite face de contact (10, 10d) présentant un contour fermé comprenant :
- une première portion frontale (11d) apte à amorcer le contact entre ladite lame (21) et ledit balai (1) ;
- une deuxième portion dorsale (12d) apte à terminer le contact entre ladite lame (21) et ledit balai (1), ladite deuxième portion dorsale (12d) comprenant un bord de fin de contact ;
ledit balai (1) présentant une largeur maximale (L) sur ladite face de contact (10), mesurée parallèlement audit axe de rotation (R) dudit collecteur, et comprenant :
- une première zone (5) portant ladite portion frontale (11d) ; et
- une deuxième zone (6) portant ladite portion dorsale (12d),
**caractérisé en ce que** ledit bord de fin de contact présente une dimension inférieure à ladite largeur maximale (L) du balai **et en ce que** ladite deuxième zone (6) est fabriquée en un matériau de résistivité plus grande que le matériau de ladite première zone (5).

3. Balai (1) selon la revendication 1, **caractérisé en ce que** ladite portion dorsale (12a) présente au moins une rainure (121a).

4. Balai (1) selon la revendication précédente, **caractérisé en ce que** ladite rainure (121a) est ménagée au milieu de ladite portion dorsale (12a).

5. Balai (1) selon la revendication 1, **caractérisé en ce que** ladite portion dorsale (12b) présente au moins un chanfrein (122b, 123b) ménagé à au moins une des extrémités de ladite portion dorsale (12b).

6. Balai (1) selon la revendication 1, **caractérisé en ce que** ladite portion dorsale (12c, 12e) présente au moins une courbe (122c, 122e).

7. Balai (1) selon la revendication précédente, **caractérisé en ce que** la courbe (122c) est concave.

8. Balai (1) selon la revendication 6, **caractérisé en ce que** la courbe (122e) est convexe.

9. Machine électrique tournante (9) comprenant un collecteur cylindrique tournant (2) portant une pluralité de lames (21), **caractérisée en ce qu'**elle comprend au moins un balai (1) selon l'une quelconque des revendications précédentes.

10. Machine électrique tournante (9) selon la revendication précédente, comprenant au moins deux balais (1) selon les revendications 4 et 5 **caractérisée en ce que,** lesdites portions dorsales (12a, 12b) desdits balais (1a, 1b) présentent un profil de fin de contact (122a, 12b) complémentaire.

11. Machine électrique tournante (9) selon la revendication précédente, **caractérisée en ce qu'**une piste secondaire (U11, U12) d'un balai (1a) est distincte d'une autre piste secondaire (U21) d'un autre balai (1b) dont les profils de fin de contact (122a, 12b) sont complémentaires.

12. Machine électrique tournante (9) selon l'une quelconque des revendications 9 à 11 **caractérisée en ce qu'**elle constitue un démarreur pour véhicule automobile.

13. Machine électrique tournante (9) selon l'une quelconque des revendications 9 à 11 **caractérisée en ce qu'**elle constitue un alternateur ou un alterno-démarreur pour véhicule automobile.

## Patentansprüche

1. Bürste (1) für eine drehende elektrische Maschine, die eine Kontaktfläche (10, 10a, 10b, 10c, 10e) umfasst, welche geeignet ist, in Reibkontakt mit einer Lamelle (21) eines zylindrischen Kommutators (2) zu gelangen, der drehbeweglich um eine feststehende Achse (R) gelagert ist,
wobei die Kontaktfläche (10, 10a, 10b, 10c, 10e) eine geschlossene Kontur aufweist, die umfasst:
- einen ersten stirnseitigen Abschnitt (11a, 11b, 11c, 11e), der eignet ist, den Kontakt zwischen der Lamelle (21) und der Bürste (1) einzuleiten;
- einen zweiten rückseitigen Abschnitt (12a, 12b, 12c, 12e), der eignet ist, den Kontakt zwischen der Lamelle (21) und der Bürste (1) zu beenden;
wobei die Bürste (1) eine maximale Breite (L) an der Kontaktfläche (10) aufweist, gemessen parallel zur Drehachse (R) des Kommutators,
der rückseitige Abschnitt (12) Abmessungen (D1) aufweist, die insgesamt größer als die maximale Breite (L) der Bürste sind; und dadurch, dass sie umfasst:
- einen ersten Bereich (5), der den stirnseitigen Abschnitt (11a, 11b, 11c, 11e) trägt; und
- einen zweiten Bereich (6), der den rückseitigen Abschnitt (12a, 12b, 12c, 12e) trägt,
**dadurch gekennzeichnet, dass** der zweite Bereich (6) aus einem Material hergestellt ist, das einen höheren spezifischen Widerstand als das Material des ersten Bereichs (5) hat.

2. Bürste (1) für eine drehende elektrische Maschine, die eine Kontaktfläche (10, 10d) umfasst, welche geeignet ist, in Reibkontakt mit einer Lamelle (21) eines zylindrischen Kommutators (2) zu gelangen, der drehbeweglich um eine feststehende Achse (R) gelagert ist,
wobei die Kontaktfläche (10, 10d) eine geschlossene Kontur aufweist, umfassend:
- einen ersten stirnseitigen Abschnitt (11d) der eignet ist, den Kontakt zwischen der Lamelle (21) und der Bürste (1) einzuleiten;
- einen zweiten rückseitigen Abschnitt (12d), der geeignet ist, den Kontakt zwischen der Lamelle (21) und der Bürste (1) zu beenden, wobei der rückseitige Abschnitt (12d) einen Kontaktenderand umfasst;
wobei die Bürste (1) eine maximale Breite (L) an der Kontaktfläche (10) aufweist, gemessen parallel zur Drehachse (R) des Kommutators, und umfasst:
- einen ersten Bereich (5), der den stirnseitigen Abschnitt (11d) trägt; und
- einen zweiten Bereich (6), der den rückseitigen Abschnitt (12d) trägt,
**dadurch gekennzeichnet, dass** der Kontaktenderand ein Maß aufweist, das geringer als die maximale Breite (L) der Bürste ist, und dadurch, dass der zweite Bereich (6) aus einem Material hergestellt ist, das einen höheren spezifischen Widerstand als das Material des ersten Bereichs (5) hat.

3. Bürste (1) nach Anspruch 1, **dadurch gekennzeichnet, dass** der rückseitige Abschnitt (12a) mindestens eine Nut (121a) aufweist.

4. Bürste (1) nach dem vorhergehenden Anspruch, **dadurch gekennzeichnet, dass** die Nut (121a) in der Mitte des rückseitigen Abschnitts (12a) ausgebildet ist.

5. Bürste (1) nach Anspruch 1, **dadurch gekennzeichnet, dass** der rückseitige Abschnitt (12b) mindestens eine Abschrägung (122b, 123b) aufweist, die an mindestens einem der Enden des rückseitigen Abschnitts (12b) ausgebildet ist.

6. Bürste (1) nach Anspruch 1, **dadurch gekennzeichnet, dass** der rückseitige Abschnitt (12c, 12e) mindestens eine Wölbung (122c, 122e) aufweist.

7. Bürste (1) nach dem vorhergehenden Anspruch, **dadurch gekennzeichnet, dass** die Wölbung (122c) konkav ist.

8. Bürste (1) Anspruch 6, **dadurch gekennzeichnet, dass** die Wölbung (122e) konvex ist.

9. Drehende elektrische Maschine (9) mit einem drehenden zylindrischen Kommutator (2), der eine Vielzahl von Lamellen (21) trägt, **dadurch gekennzeichnet, dass** sie mindestens eine Bürste (1) nach einem der vorhergehenden Ansprüche umfasst.

10. Drehende elektrische Maschine (9) nach dem vorhergehenden Anspruch, die mindestens zwei Bürsten (1) nach den Ansprüchen 4 und 5 umfasst, **dadurch gekennzeichnet, dass** die rückseitigen Abschnitte (12a, 12b) der Bürsten (1a, 1b) ein komplementäres Kontaktendeprofil (122a, 12b) aufweisen.

11. Drehende elektrische Maschine (9) nach dem vorhergehenden Anspruch, **dadurch gekennzeichnet, dass** eine zweite Bahn (U11, U12) einer Bürste (1a) von einer anderen zweiten Bahn (U21) einer anderen Bürste (1b), deren Kontaktendeprofile (122a, 12b) komplementär sind, getrennt ist.

12. Drehende elektrische Maschine (9) nach einem der Ansprüche 9 bis 11, **dadurch gekennzeichnet, dass** sie einen Starter für ein Kraftfahrzeug darstellt.

13. Drehende elektrische Maschine (9) nach einem der Ansprüche 9 bis 11, **dadurch gekennzeichnet, dass** sie einen Startergenerator für ein Kraftfahrzeug darstellt.

## Claims

1. Brush (1) for a rotary electric machine, comprising a contact face (10, 10a, 10b, 10c, 10e) that is able to come into frictional contact with a bar (21) of a cylindrical commutator (2) that is mounted so as to be able to rotate about a fixed axis (R),
said contact face (10, 10a, 10b, 10c, 10e) having a closed contour comprising:
- a first, frontal portion (11a, 11b, 11c, 11e) that is able to initiate contact between said bar (21) and said brush (1);
- a second, dorsal portion (12a, 12b, 12c, 12e) that is able to terminate contact between said bar (21) and said brush (1);
said brush (1) having a maximum width (L) on said contact face (10), measured parallel to said axis of rotation (R) of said commutator,
said dorsal portion (12) having dimensions totalling (D1) greater than said maximum width (L) of the brush; and in that it comprises
- a first region (5) bearing said frontal portion (11a, 11b, 11c, 11e); and
- a second region (6) bearing said dorsal portion (12a, 12b, 12c, 12e),
**characterized in that** said second region (6) is made from a material with a higher resistivity than the material of said first region (5).

2. Brush (1) for a rotary electric machine, comprising a contact face (10, 10d) that is able to come into frictional contact with a bar (21) of a cylindrical commutator (2) that is mounted so as to be able to rotate about a fixed axis (R),
said contact face (10, 10d) having a closed contour comprising:
- a first, frontal portion (11d) that is able to initiate contact between said bar (21) and said brush (1);
- a second, dorsal portion (12d) that is able to terminate contact between said bar (21) and said brush (1), said second, dorsal portion (12d) comprising an end-of-contact edge;
said brush (1) having a maximum width (L) on said contact face (10), measured parallel to said axis of rotation (R) of said commutator, and comprising:
- a first region (5) bearing said frontal portion (11d); and
- a second region (6) bearing said dorsal portion (12d),
**characterized in that** said end-of-contact edge has a dimension smaller than said maximum width (L) of the brush, **and in that** said second region (6) is made from a material with a higher resistivity than the material of said first region (5).

3. Brush (1) according to Claim 1, **characterized in that** said dorsal portion (12a) has at least one groove (121a).

4. Brush (1) according to the preceding claim, **characterized in that** said groove (121a) is provided in the middle of said dorsal portion (12a).

5. Brush (1) according to Claim 1, **characterized in that** said dorsal portion (12b) has at least one chamfer (122b, 123b) provided at at least one of the ends of said dorsal portion (12b).

6. Brush (1) according to Claim 1, **characterized in that** said dorsal portion (12c, 12e) has at least one curve (122c, 122e).

7. Brush (1) according to the preceding claim, **characterized in that** the curve (122c) is concave.

8. Brush (1) according to Claim 6, **characterized in that the** curve (122e) is convex.

9. Rotary electric machine (9) comprising a rotary cylindrical commutator (2) bearing a plurality of bars (21), **characterized in that** it comprises at least one brush (1) according to any one of the preceding claims.

10. Rotary electric machine (9) according to the preceding claim, comprising at least two brushes (1) according to Claims 4 and 5, **characterized in that** said dorsal portions (12a, 12b) of said brushes (1a, 1b) have a complementary end-of-contact profile (122a, 12b).

11. Rotary electric machine (9) according to the preceding claim, **characterized in that** one secondary track (U11, U12) of one brush (1a) is separate from another secondary track (U21) of another brush (1b) of which the end-of-contact profiles (122a, 12b) are complementary.

12. Rotary electric machine (9) according to any one of Claims 9 to 11, **characterized in that** it constitutes a starter for a motor vehicle.

13. Rotary electric machine (9) according to any one of Claims 9 to 11, **characterized in that** it constitutes an alternator or an alternator-starter for a motor vehicle.
